# EUROPÄISCHE PATENTSCHRIFT

(11) **EP 3 641 551 B1**
(45) Veröffentlichungstag und Bekanntmachung des Hinweises auf die Patenterteilung: **22.06.2022**
(21) Anmeldenummer: 18734181.3
(22) Anmeldetag: 22.06.2018
(51) Int. Cl.: A22C 11/00, A22C 11/12

(54) **VORRICHTUNG UND VERFAHREN ZUM ABTRENNEN VON WURST**
DEVICE AND METHOD FOR DIVIDING SAUSAGES
DISPOSITIF ET PROCÉDÉ POUR SÉPARER DES SAUCISSES

(30) Priorität: 23.06.2017 DE 102017114041; 06.07.2017 DE 102017115090; 18.12.2017 DE 102017130320
(43) Veröffentlichungstag der Anmeldung: 29.04.2020
(73) Patentinhaber: Inotec GmbH Maschinenentwicklung und Vertrieb, 72770 Reutlingen (DE)
(72) Erfinder: DOMLATIL, Miroslav, 72766 Reutlingen (DE)
(74) Vertreter: Patentanwälte und Rechtsanwalt Weiß, Arat & Partner mbB
(86) Internationale Anmeldenummer: PCT/EP2018/066702
(87) Internationale Veröffentlichungsnummer: WO 2018/234520

(56) Entgegenhaltungen:
- EP-A1- 0 865 732
- EP-A1- 0 872 184
- EP-A1- 1 844 659
- EP-A2- 2 409 573
- DE-A1- 4 115 994
- FR-A- 1 454 225

## Beschreibung

Die Erfindung betrifft eine Vorrichtung zum Abtrennen von Wurst gemäß dem Oberbegriff von Anspruch 1 sowie ein Verfahren nach Anspruch 9.

### Stand der Technik

Bei der Herstellung von Würsten an einem Wurststrang wird üblicherweise ein Wurstbrät von einer Füllmaschine über ein Füllrohr in ein einseitig verschlossenes, schlauchförmiges Verpackungshüllenmaterial, in der Regel ein Natur- oder Kunstdarm, abgefüllt und von diesem Wurststrang dann durch Abdrehen einzelne Würste gebildet. Einzelne Würste können von einem derartigen Wurststrang im Bereich der Abdrehstelle durch ein schlagendes Messer abgetrennt werden. Eine entsprechende sehr erfolgreiche Schneidmaschine zum Abtrennen von Würsten von dem Wurststrang wird in der DE 43 07 637 C beschrieben.

Eine andere Maschine zum Herstellen von Würsten an einem Wurststrang ist die sogenannte Clipsmaschine. Hier wird das Brät mittels Verdränger aus einem bestimmten Bereich zwischen den beiden Würsten, die getrennt werden sollen, verdrängt. Dazu sind zwei Verdränger vorgesehen, wobei der eine statisch und der andere dynamisch ist. Beide Verdränger schließen zuerst/schnüren die Wurst ein. Der statischen Verdränger hält den Darm. Der dynamische Verdränger verdrängt das Brät, so dass ein Abstand zwischen den beiden Verdrängern entsteht. Dann werden an beiden Enden dieses verdrängten Bereichs auf einmal zwei Clips gesetzt. Derartige Clipsmaschine werden beispielsweise in der DE 20 2005 021 188 U1 beschreiben.

Heute wird dagegen immer mehr das alte traditionelle Abbinden von Würsten mittels eines Bindfadens gefordert. Eine mit Naturbindfaden abgebundene Wurst vereinigt Produktsicherheit und traditionelles Erscheinungsbild. Das abgebundene Produkt mittels Naturbindfaden ist sicher, da kein Metall oder Plastik beim Separieren der Portionen verwendet wird. Der Naturbindfaden verleiht dem Produkt ein handwerklich gefertigtes Aussehen.

Derartige Abbindemaschinen sind grundsätzlich von den Clipsmaschinen zu unterscheiden. Auch diese Maschinen arbeiten mit Verdrängerpaaren und zwar einem statischen und einem dynamischen. Beide Verdränger schließen zuerst/schnüren die Wurst ein. Parallel zum gefüllten Darm läuft ein Bindfaden oder eine Schnur mit, der/die von der Maschine an vorher definierten, produktbezogenen Stellen ein- oder mehrmals um den Darm gewickelt und damit eine erste Abbindestellen gebildet wird. Die statischen Verdränger halten den Darm/ die Wurst. Der dynamische Verdränger verdrängt jetzt das Brät, so dass ein Abstand zwischen den beiden Verdrängern entsteht. Die Abbindeschnur läuft axial mit. Dann wird die zweite Abbindung erzeugt. Die beiden Abbindestellen und der Abstand dazwischen, sofern ein solcher erzeugt wird, werden als Abbindebereichs bezeichnet. So können Würste mit oder ohne Zwischenabstand abgebunden werden. Dabei können auch Aufhängeschlaufen integriert oder ganze Wurststränge gebildet werden. Eine derartige Abbindemaschine ist beispielsweise in der EP 0 865 732 A1 gezeigt.

So abgetrennt und portioniert werden die Würste dann dem nächsten Verarbeitungsschritt, z.B. einem Brühen, Trocknen oder Räuchern, zugeführt. Diese Form des Portionierens bzw. Abpackens kommt überall dort zum Einsatz, wo entweder kein Metall/Plastik verwendet werden oder einfach ein traditionelles handwerkliches Erscheinungsbild erzielt werden soll. Mit diesem Verfahren kommen nahezu alle Wurstsorten mit allen Natur-, Collagen- oder Kunstdärmen zum Einsatz. Ebenso gibt es mannigfaltige Arten und Sorten von Bindfäden, die bei diesem Verfahren verwendet werden.

Bei den bekannten Abbindemaschinen stellt sich das Problem, dass die Würste nicht ohne weiteres von dem Wurststrang abgetrennt werden können, da der Abbindebereich und vor allem die Schnur, welche den Abbindebereich bevorzugt mehrfach umwindet, sehr elastisch ist. Dementsprechend bietet sie keinen oder nur einen geringen Widerstand gegen ein schlagendes Messer, welches beispielsweise bei einer Maschine gemäß der DE 43 18 301 A verwendet wird. Bei jeder Abbindemaschine, die sich auf dem Markt befindet, müssen die Würste deshalb von Hand einzeln mittels einer Schere abgeschnitten werden, wenn Einzelportionen gewünscht sind. Dies ist sehr mühsam und zeitaufwändig und der Industriekunde ist an die Clipsmaschine gewohnt, wo inzwischen maschinell und vollautomatisch die einzelnen Würste getrennt werden.

Weiterhin offenbart die EP 1 844 659 A1 ein System aus einer Wurstclipmaschine und einer Wurstfördereinrichtung sowie ein Verfahren zum Steuern des Systems. Bei dem System weist die Wurstclipmaschine ein Füllrohr auf. Die motorisch angetriebene Wurstfördereinrichtung enthält wenigstens ein Förderelement und ist durch einen Gliederförderer gebildet und unmittelbar benachbart des Füllrohrs der Wurstclipmaschine in der Weise angeordnet ist, dass ein an dem Füllrohr der Wurstclipmaschine gefülltes und verschlossenes Wurstprodukt von dem wenigstens einen Förderelement des Gliederförderers erfassbar ist.

Auch die EP 0 872 184 A1 offenbart ein Verfahren zur Herstellung von Würsten, deren beide Enden jeweils durch einen von einem Fadenvorrat abgezogenen Faden miteinander verbunden sind, wobei der Faden zunächst an einem ersten verschlossenen Wurstende befestigt, danach eine erste bestimmte Fadenlänge freigegeben und die Wurst befüllt, anschließend das zweite Wurstende zusammen mit dem Faden von zwei Verdrängerscherenpaaren gegriffen und eingeschnürt wird, und es werden sodann die beiden Verdrängerscherenpaare gespreizt, so dass ein füllgutfreier Zopfabschnitt entsteht, in dem die Wurst schließlich verschlossen wird.

Zudem offenbart die EP 2 409 573 A2 in automatisches Verfahren zum Abbinden von hufeisenförmigen Würsten mit einem Abbindefaden und einer Aufhängeschnur, wobei der Abbindefaden in engen Windungen unter Anwendung einer an sich bekannten Technologie um die Wursthaut gewunden wird, so dass ein Abbindepunkt entsteht, und wobei die Aufhängeschnur zwischen der eingeengten Wursthaut und den Windungen so eingeklemmt sind, dass sie sich nicht mehr aus dem Abbindepunkt ausfädeln können.

### Aufgabe der Erfindung

Der vorliegenden Erfindung liegt nun die Aufgabe zugrunde, eine Möglichkeit aufzuzeigen, wie auf einfache und kostengünstige Art und Weise auch bei einer Abbindemaschine Würste von einem Wurststrang getrennt werden können, um gegenüber auf dem Markt befindlichen Abbindemaschinen wettbewerbsfähig zu bleiben

### Lösung der Aufgabe

Zur Lösung der Aufgabe führen die kennzeichnenden Merkmale von Anspruch 1 sowie von Anspruch 9.

Da in dem Abbindebereich die Schnur auch von Abbindestelle zu Abbindestelle geführt ist, erfolgt ein gleichzeitiges Durchtrennen der Wursthaut und der Schnur in diesem Abbindebereich. Damit werden die Abbindemaschinen wieder wettbewerbsfähig gegenüber den Clipsmaschinen, da dem Wunsch des Industriekunden nach dem automatischen Abtrennen von Einzelportionen entsprochen wird und dennoch das traditionelle Abbinden der Abbindemaschine erhalten bleibt.

In einem bevorzugten Ausführungsbeispiel der Erfindung ist nicht nur eine Schneidposition vorgesehen, an der ein Schneidvorgang stattfindet. Bevorzugt können mindestens drei Schneidpositionen vorgesehen werden, sodass auch Würste paarweise oder mehr von einem Wurststrang abgeschnitten werden können. Dementsprechend ist es denkbar, dass eine Schneideinrichtung programmiert die einzelnen Schneidpositionen ansteuert. Bevorzugt können jedoch auch mehrere aufeinanderfolgende Schneideinrichtungen vorgesehen werden, die das gewünschte Abtrennen der Würste von dem Wurststrang durchführen. Zu diesem Zweck werden die Würste bevorzugt auf einem Transportband bewegt.

Bevorzugt arbeitet die Schneideinrichtung mechanisch, da nur so die Einzelportionen automatisch geschnitten werden können. Diese Schneideinrichtung weist bevorzugt mindestens eine Schneidklinge auf, die gegen einen Anschlag schneidet. Dies ist eine bereits bewährte und gute Möglichkeit, schnell und sauber, die einzelnen Portionen voneinander zu trennen. Die Schneideinrichtung kann jedoch auch zumindest zwei Schneidklingen aufweisen, die scherenartig zusammenwirken.

Der Möglichkeit des Schneidens sind hier keine Grenzen gesetzt. Auch per Laser und Ultraschall oder dergleichen soll die Schneideinrichtung der vorliegenden Erfindung betreibbar sein.

Die Schneideinrichtung soll an mindestens einer Schneidposition vorhanden sein, an der geschnitten wird. In diesem Fall hat die Schneideinrichtung eine fixe Position innerhalb der Abbindemaschine.

Jedoch ist es auch möglich, dass an weiteren Schneidpositionen eine Schneideinrichtung vorhanden ist. Auch mehrere Schneideinrichtungen an einer Maschine sind programmierbar, was dazu führt, dass noch effizienter und schneller gearbeitet werden kann. Mehrere Einzelportionen zur gleichen Zeit bedeuten, dass Arbeitsschritte eingespart werden können.

Erfindungsgemäß ist die Schneideinrichtung entlang dem Abbindebereich verfahrbar. Auf diese Weise kann durch entsprechende Sensoren die geeignetste Schneidstelle gesucht und gefunden werden.

Der Abbindebereich ist zumindest teilweise von einer Schnur umwickelt, da die Schnur zum Abbinden von einer Abbindestelle zur anderen Abbindestelle in dem Abbindebereich und von einer Wurst zur anderen fortgeführt wird. Sie muss nicht extra bei jeder Wurst abgeschnitten werden, was vor allem zeitsparend ist. Ausserdem erhält die Schnur das natürliche und handwerkliche Aussehen der Wurst.

In einem weiteren Ausführungsbeispiel ist dem Abbindebereich ein - oder beidseitig ein Verdränger zugeordnet, wie dies in der EP 0 865 732 A1 beschrieben ist. Dieser/diese soll/en die eine Wurst von der nachfolgenden Wurst trennen, das Brät aus dem Abbindebereich verdrängen und den Abbindebereich dehnen, damit das Abbinden besser erfolgt und die Schneidvorrichtung präzise ihre Arbeit leisten kann.

Die Schneideinrichtung ist nach dem in der Regel statischen Verdränger angeordnet, damit bei nur einem Verdränger die vorangegangene Wurst nicht beschädigt werden kann.

Bei zwei vorgesehenen Verdrängern für die Maschine, soll die Schneideinrichtung zwischen den beiden angeordnet sein, um die oben genannte Dehnung voll auszunutzen und einen präzisen Schnitt zu gewährleisten.

Es ist auch vorgesehen, dass die Schneideinrichtung entlang des Abbindebereichs verfahrbar ist. Das führt dazu, dass weniger Fehlschnitte passieren und der Schnittpunkt genau gesetzt werden kann.

Bei dem Verfahren zum Abtrennen von zumindest einer Wurst von einer anderen Wurst, insbesondere von einem Wurststrang im Bereich eines mit zwei Abbindestellen gebildeten Abbindebereichs zwischen der Wurst und dem Wurststrang, wobei Brät in eine frontwärtig abgebundene Hülle abgefüllt und nach einer vorbestimmten Portion eine Abbindestelle zur folgenden Wurst durch Umschlingen dieser Stelle mit einem Faden oder einer Schnur gebildet wird, ist es vorgesehen, dass dieser Abbindebereich von einer automatisch arbeitenden Schneideinrichtung durchtrennt wird. Damit wird dem allgemeinen Kundenwunsch entsprochen, dass die Abbindemaschinen effizienter und wirtschaftlicher gestaltet sind.

Das Brät in der Hülle wird in der Regel von zwei Verdrängern eingeschnürt, wobei der eine Verdränger statisch bleibt und der andere dynamisch ist und das Brät aus dem Abbindebereich verdrängt. Damit kann sauber an dem Abbindebereich geschnitten werden, ohne dass die Schneideinrichtung verschmutzt wird oder Brät austritt.

Der Abbindebereich wird vor dem Schneiden gedehnt, sei es durch das Verdrängen oder durch ein separates laufendes Transportband oder durch ein anderes Hilfsmittel, um den Wurstrang zu spannen und dem Schneidwerkzeug genügend Raum und Widerstand zu geben, um seinen Schnitt anzusetzen und leicht durchzuführen.

Die Schneideinrichtung kann entlang dem Abbindebereich und/oder radial zum Abbindebereich bewegt werden. Falls eine Wurst länger ist als die andere, kann die Schneideinrichtung selbstständig darauf eingehen und zur Not an eine andere Position fahren. Auch hiermit werden weniger Fehlschnitte produziert.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
**Figur 1** eine schematisch dargestellte Seitenansicht einer Vorrichtung zum Abtrennen einer Wurst insbesondere von einem Wurststrang im Bereich eines Abbindebereichs;
**Figur 2** einen Ausschnitt der Vorrichtung gemäß Figur 1 ;
**Figur 3** eine schematisch dargestellte Ansicht der Vorrichtung gemäß Figur 1 in Laufrichtung der Wurst im Bereich einer Schneidstelle;
**Figur 4** eine schematisch dargestellte Ansicht der Vorrichtung gemäß Figur 1 in Laufrichtung der Wurst im Bereich eines weiteren Ausführungsbeispiels einer Schneidstelle.

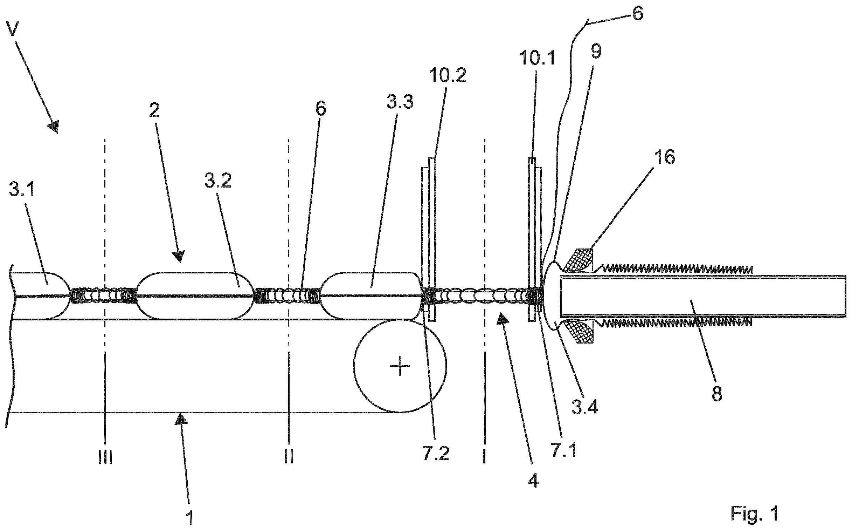

In Figur 1 wird eine erfindungsgemässe Vorrichtung V zum Abtrennen von Wurst gezeigt, wobei diese ein Abfuhrband 1 aufweist, auf dem ein Wurststrang 2 bewegt wird. Die Funktionsweise des Abfuhrbandes 1 ist schon durch vorhergehende Erfindungen bekannt und wird daher im Verlauf nicht weiter beschrieben.

Der Wurststrang 2 besteht aus Würsten 3 und Abbindebereichen 4 zwischen den Würsten 3. In den Abbindebereichen 4 ist ein Brät weitgehend entfernt, sodass die Abbindebereiche gegenüber der Wurst wesentlich verdünnt sind. Sie ist von einer Schnur 6 fest umwickelt. Die Schnur 6 wird im gezeigten Ausführungsbeispiel über den gesamten Wurststrang 2 geführt, wobei sie vor allem an Abbindestellen 7.1 bzw. 7.2 nahe einer Wurst besonders stark gewickelt ist, damit der in der Wurst 3 befindliche Inhalt nicht austreten kann. Des weiteren weist die Vorrichtung V ein Füllrohr 8 auf, aus dem bevorzugt Wurstbrät in einen Darm oder allgemein eine Hülle 9 am Ende des Füllrohrs 8 abgefüllt wird. Diese Hülle 9 ist auf das Füllrohr 8 aufgeschoben und vor der Öffnung des Füllrohrs 8 abgebunden. Das Brät wird in die abgebundene Hülle 9 aus dem Füllrohr 8 eingepresst, wobei die Hülle 9 von dem Füllrohr 8 je nach Portion nachgezogen wird. Bremsen 16 verhindern, dass Brät nach hinten fließt und die Hülle 9 beim Einfüllen des Bräts vom Füllrohr 8 rutscht bzw. die Hülle 9 wird gegenüber dem Füllrohr 8 gespannt.

Sofern nur eine Schneideinrichtung 11, 11.1 vorgesehen ist, erfolgt ein Abschneiden in der Schneidposition I, sofern mehrere Schneidpositionen II und III vorgesehen sind, kann auch bei diesen durch separate Schneideinrichtungen ein Abtrennen der jeweiligen Würste erfolgen.

Die Schneideinrichtung 11 soll an dem Abbindebereich 4 verfahrbar sein, sodass die optimale Stelle für den Schnitt automatisch erfasst werden kann.

Die Schneideinrichtung 11 kann auch ausserhalb der Verdränger 10.1 und 10.2 positioniert werden und somit die Würste 3.1, 3.2 oder 3.3 auch in beispielsweise der Schneidposition II und/oder III schneiden. Damit auch hier eine Dehnung des Abbindebereiches (4) erfolgt, wird das Abfuhrband 1 schneller laufen gelassen.

Jeder Abbindebereich 4 ist als eine mögliche Schneideposition I bis III zu sehen, in der die Würste 3 voneinander getrennt werden können, wobei im bevorzugten Ausführungsbeispiel nur die Schneideposition I genauer beschrieben werden soll.

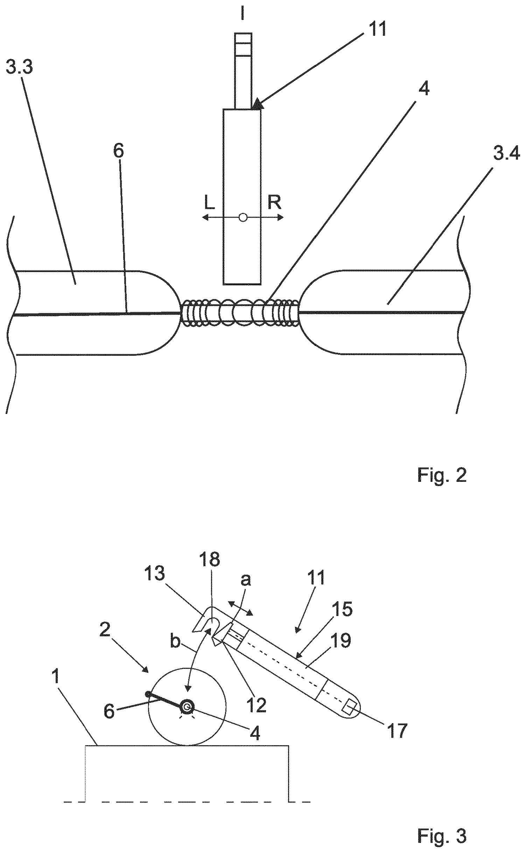

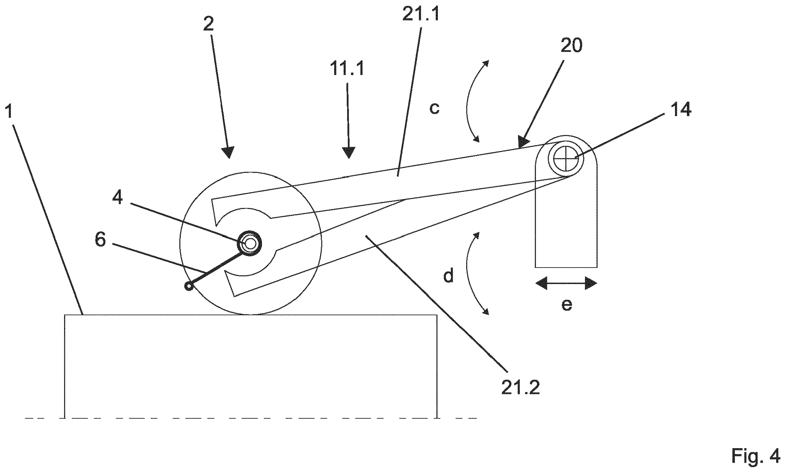

In der Schneideposition I sind an dem dort befindlichen Abbindebereich 4 mindestens einseitig, jedoch im bevorzugten Ausführungsbeispiel beidseitig, Verdränger 10.1 und 10. 2 vorgesehen. Beide Verdränger 10.1 und 10.2 schnüren den Wurststrang 2 ein, wobei danach ein Verdränger 10.1 statisch bleibt, während ein dynamischer Verdränger 10.2 das Brät aus dem Abbindebereich 4 in die vorlaufende Wurst 3.3 schiebt. Damit wird auch der Abbindebereich 4 gedehnt, damit bevorzugt zwischen den Verdränger 10.1 und 10.2 eine Schneideinrichtung 11, die in den Figuren 3 und 4 genauer beschrieben wird, die Würste 3 voneinander trennen kann.

Es ist zu erwähnen, dass auch ausserhalb der Verdränger 10.1 und 10.2 an den Schneidpositionen II und III jeweils eine Schneideinrichtung 11 angeordnet werden kann, welche die Würste 3 voneinander trennt.

Gemäss Figur 2 wird eine vergrösserte Seitenansicht eines Ausschnitts der Schneidposition I der Vorrichtung V gezeigt, wobei hier auf die vorgesehene Schneideinrichtung 11 an dem Abbindebereich 4 eingegangen wird. Die vorgesehen Schneideinrichtung 11 soll an dem Abbindebereich 4 entlang der Pfeile L und R verfahrbar sein, so dass eine optimale Schneideposition I für die Schneideinrichtung 11 gewährleistet ist.

Gemäß Figur 3 weist die Schneideinrichtung 11 ein Schwenkmesser 15 auf, welches um eine Welle 17 schwenkt. Gegenüber der Welle 17 ist dem Schwenkmesser 15 eine Gabel zugeordnet, die eine Längsöffnung 18 zur Aufnahme des Abbindebereichs 4 aufweist. Die Gabel wird zudem von einem fixen Anschlag 13 und einem beweglichen Messer 12 gebildet, wobei das Messer 12 eine gegenüber dem Anschlag 13 konisch angestellte Klinge aufweist, die bewirkt, dass der Abbindebereich 4 in die Öffnung 18 eingezogen wird. Bewegt wird das Messer 12 durch einen pneumatischen Zylinder 19. Die Bewegung wird durch den Pfeil a verdeutlicht. Der Schwenkmesserantrieb erfolgt ebenfalls über einen speziellen Zylinder. Die Schwenkbewegung b soll ebenfalls pneumatisch vonstatten gehen.

Figur 4 zeigt ein weiteres Ausführungsbeispiel einer Schneideinrichtung 11.1. Hier ist ein Antrieb 14 angedeutet, der Scherenarme 21.1 und 21.2 einer Schere 20 in Richtung der Pfeile c und d bewegen soll. Auch diese soll automatisch und über eine pneumatische Technik erfolgen. Ferner soll die Schneideinrichtung 11.1 hin und weg von dem Abbindebereich 4 bewegbar sein, so dass ein entsprechendes Scherenmaul der Schere 20 den Abbindebereich (4) aufnehmen kann.

Natürlich sind noch viele weiteren Schneideinrichtungen, wie beispielsweise Laser, Ultraschall und dergleichen, möglich. Die Schneideinrichtung muss nur so ausgelegt sein, dass sie möglichst in einem Arbeitsgang sowohl die Wursthaut im Abbindebereich als auch die Schnur durchtrennt. Bei den in den Figuren gezeigten mechanischen Schneideinrichtungen erfasst die Schneideinrichtung sowohl die Wursthaut im Abbindebereich als auch die Schnur und durchtrennt diese. Das ganze findet in nur einem Arbeitsgang statt.

**Bezugszeichenliste**

| | | | | | |
|---|---|---|---|---|---|
| 1 | Abfuhrband | 34 | | V | Vorrichtung |
| 2 | Wurststrang | 35 | | I | Schneid position |
| 3 | Wurst | 36 | | II | Schneid position |
| 4 | Abbindebereich | 37 | | III | Schneid position |
| 5 | | 38 | | L | Richtungspfeil |
| 6 | Schnur | 39 | | R | Richtungspfeil |
| 7 | Abbindestelle | 40 | | a | Richtungspfeil |
| 8 | Füllrohr | 41 | | b | Richtungspfeil |
| 9 | Hülle | 42 | | c | Richtungspfeil |
| 10 | Verdränger | 43 | | d | Richtungspfeil |
| 11 | Schneideinrichtung | 44 | | e | Richtungspfeil |
| 12 | Messer | 45 | | | |
| 13 | Anschlag | 46 | | | |
| 14 | Antrieb | 47 | | | |
| 15 | Schwenkmesser | 48 | | | |
| 16 | Bremse | 49 | | | |
| 17 | Welle | 50 | | | |
| 18 | Öffnung | 51 | | | |
| 19 | Zylinder | 52 | | | |
| 20 | Schere | 53 | | | |
| 21 | Scherenarme | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Abtrennen von zumindest einer Wurst (3.1- 3.4) von einer anderen Wurst (3.2-3.4), insbesondere von einem Wurststrang (2) im Bereich eines mit zwei Abbindestellen (7.1, 7.2) gebildeten Abbindebereichs (4) zwischen der Wurst (3.1-3.4) und dem Wurststrang (2), wobei der Abbindebereich (4) zumindest teilweise von einer Schnur (6) umwickelt und diese zum Abbinden von einer Wurst zur anderen fortgeführt ist, wobei zumindest dem Abbindebereich (4) und der Schnur (6) in diesem Abbindebereich (4) eine automatisch arbeitende Schneideinrichtung (11, 11.1) zum gleichzeitigen Durchtrennen von Schnur (6) und Abbindebereich (4) zugeordnet ist
**dadurch gekennzeichnet,**
**dass** die Schneideinrichtung (11) entlang des Abbindebereiches (4) verfahrbar ist.

2. Vorrichtung nach Anspruch 1, **dadurch gekennzeichnet, dass** an mehreren Schneidpositionen (I, II, III) eine Schneideinrichtung (11) vorgesehen ist.

3. Vorrichtung nach Anspruch 1, **dadurch gekennzeichnet, dass** die Schneideinrichtung (11, 11.1) mechanisch arbeitet.

4. Vorrichtung nach wenigstens einem der vorhergehenden Ansprüche, ▪ **dadurch gekennzeichnet, dass** die Schneideinrichtung (11) mindestens ein Messer (12) aufweist, das gegen einen Anschlag (13) schneidet.

5. Vorrichtung nach einem der vorhergehenden Ansprüche, **dadurch gekennzeichnet, dass** die Schneideinrichtung (11.1) zumindest zwei Scherenarme (21.1, 21.2) aufweist, die scherenartig zusammenwirken.

6. Vorrichtung nach wenigstens einem der vorhergehenden Ansprüche, **dadurch gekennzeichnet, dass** dem Abbindebereich (4) ein - oder beidseitig ein Verdränger (10.2, 10.2) zugeordnet ist.

7. Vorrichtung nach Anspruch 6, **dadurch gekennzeichnet, dass** die Schneideinrichtung (11,11.1) nach einem Verdränger (10.1) angeordnet ist.

8. Vorrichtung nach Anspruch 6 oder 7, **dadurch gekennzeichnet, dass** die Schneideinrichtung (11) zwischen zwei Verdränger (10.1, 10.2) angeordnet ist.

9. Verfahren zum Abtrennen von zumindest einer Wurst (3.1-3.4) von einer anderen Wurst (3.1-3.4), insbesondere von einem Wurststrang (2) im Bereich eines mit zwei Abbindestellen (7.1, 7.2) gebildeten Abbindebereichs (4) zwischen der Wurst (3) und dem Wurststrang (2), wobei Brät in eine frontwärtig abgebundene Hülle (9) abgefüllt und nach einer vorbestimmten Portion ein Abbindebereich (4) zur folgenden Wurst (3.2-3.4) durch Umschlingen dieser Stelle mit einem Faden oder einer Schnur (6) gebildet wird und diese zum Abbinden von einer Wurst zur anderen fortgeführt ist, **dadurch gekennzeichnet, dass** dieser Abbindebereich (4) und die Schnur (6) in diesem Abbindebereich (4) von einer automatisch arbeitenden und entlang des Abbindebereiches (4) verfahrbaren Schneideinrichtung (11, 11.1) durchtrennt wird.

10. Verfahren nach Anspruch 9, **dadurch gekennzeichnet, dass** das Brät in der Hülle (9) zumindest nach einer Seite, bevorzugt nach beiden Seiten des Abbindebereichs (4) verdrängt wird.

11. Verfahren nach Anspruch 10, **dadurch gekennzeichnet, dass** der Abbindebereich (4) zwischen zwei Verdrängern (10.1, 10.2) geschnitten wird.

12. Verfahren nach einem der Ansprüche 9 bis 11, **dadurch gekennzeichnet, dass** der Abbindebereich (4) vor dem Schneiden gedehnt (L, R) wird.

13. Verfahren nach wenigstens einem der Ansprüche 9 bis 12, **dadurch gekennzeichnet, dass** die Schneideinrichtung (11,11.1) entlang des Abbindebereichs (4) und/oder radial zum Abbindebereich (4) bewegt wird.

## Claims

1. Device for separating at least one sausage (3.1 - 3.4) from another sausage (3.2 - 3.4), in particular from a sausage strand (2) in the region of a setting region (4) formed with two setting points (7.1, 7.2) between the sausage (3.1 - 3.4) and the sausage strand (2), wherein the setting region (4) is at least partially wrapped by a cord (6) and this is continued from one sausage to the other for tying, wherein an automatically operating cutting device (11, 11.1) for simultaneously cutting through the cord and the setting region (4) is assigned to at least the setting region (4) and the cord (6) in this setting region (4),
**characterized in**
**that**. the cutting device (11) is movable along the setting region (4).

2. Device according to claim 1, **characterized in that** a cutting device (11) is provided at a plurality of cutting positions (I, II, III).

3. Device according to claim 1, **characterized in that** the cutting device (11, 11.1) operates mechanically.

4. Device according to at least one of the preceding claims, **characterized in that** the cutting device (11) comprises at least one knife (12) which cuts against a stop (13).

5. Device according to one of the preceding claims, **characterized in that** the cutting device (11.1) has at least two scissor arms (21.1, 21.2) which interact in a scissor-like manner.

6. Device according to at least one of the preceding claims, **characterized in that** the setting region (4) is assigned a displacer (10.2, 10.2) on one or both sides.

7. Device according to claim 6, **characterized in that** the cutting device (11, 11.1) is arranged after a displacer (10.1).

8. Device according to claim 6 or 7, **characterized in that** the cutting device (11) is arranged between two displacers (10.1, 10.2).

9. Method for separating at least one sausage (3.1 - 3.4) from another sausage (3.1 - 3.4), in particular from a strand of sausage (2) in the region of a setting region (4) formed with two setting points (7.1, 7.2) between the sausage (3) and the strand of sausage (2), wherein sausage meat is filled into a casing (9) set at the front and, after a predetermined portion, a setting region (4) is formed for the following sausage (3.2 - 3.4) by looping a thread or a cord (6) around this point and this is continued from one sausage to the other for tying, **characterized in that** this setting region (4) and the cord (6) are cut in this setting region by (4) an automatically operating and along the setting region (4) movable cutting device (11, 11.1).

10. Method according to claim 9, **characterized in that** the sausage meat is displaced in the casing (9) at least to one side, preferably to both sides, of the setting region (4).

11. Method according to claim 10, **characterized in that** the setting region (4) is cut between two displacers (10.1, 10.2).

12. Method according to one of the claims 9 to 11, **characterized in that** the setting region (4) is stretched (L, R) before cutting.

13. Method according to at least one of the claims, **characterized in that** the cutting device (11, 11.1) is moved along the setting area (4) and/or radially to the setting area (4).

## Revendications

1. Appareil de séparation d'au moins une saucisse (3.1-3.4) d'une autre saucisse (3.2-3.4), en particulier d'un cordon de saucisses (2) dans la zone d'une zone de ficelage (4) formée par deux points de ficelage (7.1, 7.2) entre la saucisse (3.1-3.4) et le cordon de saucisses (2), la zone de ficelage (4) étant au moins partiellement enveloppée par une ficelle (6) et ladite ficelle se prolongeant pour ficeler une saucisse à une autre, un dispositif de découpe (11, 11.1) à fonctionnement automatique permettant le sectionnement simultané de la ficelle (6) et de la zone de ficelage (4) étant associé au moins à la zone de ficelage (4) et à la ficelle (6) située dans ladite zone de ficelage (4),
**caractérisé en ce**
**que** le dispositif de découpe (11) est mobile le long de la zone de ficelage (4).

2. Appareil selon la revendication 1, **caractérisé en ce qu'**un dispositif de découpe (11) est prévu à plusieurs positions de découpe (I, II, III).

3. Appareil selon la revendication 1, **caractérisé en ce que** le dispositif de découpe (11, 11.1) fonctionne mécaniquement.

4. Appareil selon au moins l'une des revendications précédentes, **caractérisé en ce que** le dispositif de découpe (11) présente au moins une lame (12) qui découpe contre une butée (13).

5. Appareil selon l'une des revendications précédentes, **caractérisé en ce que** le dispositif de découpe (11.1) présente au moins deux bras de ciseaux (21.1, 21.2) qui coopèrent comme des ciseaux.

6. Appareil selon au moins l'une des revendications précédentes, **caractérisé en ce qu'**un déplaceur (10.2, 10.2) est associé à la zone de ficelage (4) d'un côté ou des deux côtés.

7. Appareil selon la revendication 6, **caractérisé en ce que** le dispositif de découpe (11, 11.1) est disposé en aval d'un déplaceur (10.1).

8. Appareil selon la revendication 6 ou 7, **caractérisé en ce que** le dispositif de découpe (11) est disposé entre deux déplaceurs (10.1, 10.2).

9. Procédé de séparation d'au moins une saucisse (3.1-3.4) d'une autre saucisse (3.1-3.4), en particulier d'un cordon de saucisses (2) dans la zone d'une zone de ficelage (4) formée par deux points de ficelage (7.1, 7.2) entre la saucisse (3) et le cordon de saucisses (2), de la chair à saucisse étant introduite dans une enveloppe (9) nouée à l'avant et, après une portion prédéterminée, une zone de ficelage (4) vers la saucisse suivante (3.2-3.4) étant formée en enroulant un fil ou une ficelle (6) autour dudit point et ladite ficelle se prolongeant pour le ficelage d'une saucisse à une autre, **caractérisé en ce que** ladite zone de ficelage (4) et la ficelle (6) sont sectionnées dans ladite zone de ficelage (4) par un dispositif de découpe (11, 11.1) à fonctionnement automatique mobile le long de la zone de ficelage (4).

10. Procédé selon la revendication 9, **caractérisé en ce que** la chair à saucisse dans l'enveloppe (9) est déplacée au moins d'un côté, de préférence des deux côtés, de la zone de ficelage (4).

11. Procédé selon la revendication 10, **caractérisé en ce que** la zone de ficelage (4) est découpée entre deux déplaceurs (10.1, 10.2).

12. Procédé selon l'une des revendications 9 à 11, **caractérisé en ce que** la zone de ficelage (4) est étirée (L, R) avant la découpe.

13. Procédé selon au moins l'une des revendications 9 à 12, **caractérisé en ce que** le dispositif de découpe (11, 11.1) est déplacé le long de la zone de ficelage (4) et/ou radialement à la zone de ficelage (4).
